# EUROPEAN PATENT APPLICATION

(11) **EP 1 548 056 A1**
(43) Date of publication of application: **29.06.2005**
(21) Application number: 03791371.2
(22) Date of filing: 28.08.2003
(51) Int. Cl.: C08L 9/02, C08L 33/06, C08K 5/11

(54) **POLYMER ALLOY, CROSSLINKED ARTICLES, AND FUEL HOSES**

(30) Priority: 29.08.2002 JP 2002250771
(71) Applicant: Zeon Corporation, Tokyo 100-8323 (JP)
(72) Inventor: KOMIYAMA, Shinji, c/o Zeon Corporation, Tokyo 100-8323 (JP); NUMATA, Hiromi, c/o ZEON CORPORATION, Tokyo 100-8323 (JP); YOKOYAMA, Seiji, c/o ZEON CORPORATION, Tokyo 100-8323 (JP)
(74) Representative: Albrecht, Thomas, Dr.
(86) International application number: PCT/JP2003/010929
(87) International publication number: WO 2004/020516

(57) **Abstract**

A polymer alloy formed by containing 40 to 90 wt% of a nitrile group-containing copolymer rubber (A) and 10 to 60 wt% of an acrylic resin (B); wherein said acrylic resin (B) contains at least 50 wt% of (meth)acrylic ester monomer unit and 1 to 27 wt% of α,β-ethylenically unsaturated nitrile monomer unit is provided, by which a polymer alloy having excellent balance of resistance to cold, ozone, gasoline penetration and fuel oil and suitable as a material for fuel hoses can be provided.

## Description

### FIELD OF THE INVENTION

The present invention relates to a polymer alloy having excellent balance of resistance to cold, ozone, gasoline penetration and fuel oil and suitable as a material for fuel hoses, a cross-linked material of the polymer alloy, and a fuel hose composed of the cross-linked material.

### BACKGROUND ART

A nitrile group-containing copolymer rubber, such as acrylonitrile-butadiene rubber, is a typical rubber used for various usages, such as a fuel hose used for a fuel piping of vehicles. However, a nitrile group-containing copolymer rubber has poor resistance to ozone, and had a disadvantage that deterioration proceeds rapidly unless an ozone deterioration inhibitor is blended. Thus, a nitrile group-containing copolymer rubber is generally added with an ozone deterioration inhibitor to improve the resistance to ozone thereof.

However, a reaction mechanism of an ozone deterioration inhibitor is to prevent deterioration of a rubber by reacting with radicals generated by ozone before the radicals react with rubber molecules, therefore, the ozone deterioration inhibitor itself may change to lose its function. As a result, even though deterioration of the rubber molecules can be delayed, it is not completely prevented and it is difficult to maintain resistance to ozone for a long time in the rubber.

Thus, to maintain resistance to ozone for a long time in a rubber, a polymer alloy obtained by blending a nitrile group-contained copolymer rubber into a vinyl chloride resin has been proposed (the U.S. Patent Publication No. 2,330,353). The polymer alloy has excellent resistance to ozone and resistance to fuel oil at a time, so that it is widely used as parts for vehicles, mainly as fuel hoses. However, in a vinyl chloride resin included in the polymer alloy, chloride is released due to disposal processing in some cases, which may cause an environment issue. Accordingly, there is a tendency of suppressing the use particularly within the country, and a new material has been demanded.

A variety of proposals have been made for new material not using a halogen-containing resin, such as a vinyl chloride resin. For example, polymer alloys of a nitrile group-containing copolymer rubber with a variety of halogen-free thermoplastic resins, such as a polyamide resin (Shinichiro Goto; Papers of The Society of Rubber Industry, Japan; page 247, volume 73, 2000), a polypropyrene resin (Hirokazu Iino; Papers of The Society of Rubber Industry, Japan; page 7, volume 38, 1965), and a styrene-acrylonitrile copolymer resin (Toshio Nishi; Papers of The Society of Rubber Industry, Japan; page 384, volume 68, 1995), have been proposed.

However, molds (cross-linked materials) obtained by molding them did not have sufficient resistance to ozone.

In recent years, as an environmental measure, a reduction of evaporation of gasoline into the air has been required, and regulations on a gasoline penetration amount have become harder also regarding fuel hoses of vehicles, etc., so that resistance to gasoline penetration at a certain standard has been required. Also, since fuel hoses may be used under extremely cold conditions, resistance to cold has to be provided.

However, resistance to gasoline penetration and resistance to cold are mutually opposite properties, so that it has become a significant subject to strike a balance between them.

The Japanese Unexamined Patent Publication No. 2001-226527 proposes a blend of a nitrile group-containing copolymer rubber and a vinyl based resin having a cross-linking functional group, and an acrylic resin is mentioned as an example of the vinyl based resin. According to a technique described in the publication, a rubber having excellent resistance to fuel oil and a resin having excellent resistance to ozone can be sufficiently dispersed by introducing a cross-linking functional group to a part of the vinyl based resin, and the fact is utilized to attain a balance of resistance to fuel oil and resistance to ozone of a cross-linking material of the blend.

In this technique described in the publication, however, since a cross-linking functional group is introduced to a part of a vinyl based resin, it may be cured due to a cross-linking reaction during processing of kneading and drying, etc. and the vinyl based resin is liable to be not sufficiently finely dispersed in a nitrile group-containing copolymer rubber and resistance to ozone becomes poor.

### SUMMARY OF THE INVENTION

An object of the present invention is to provide a polymer alloy having excellent balance of resistance to cold, ozone, gasoline penetration and fuel oil and suitable as a material for fuel hoses, a cross-linked material of the polymer alloy, and a fuel hose composed of the cross-linked material.

To attain the above object, according to the present invention, there is provided a polymer alloy formed by containing 40 to 90 wt% of a nitrile group-containing copolymer rubber (A) and 10 to 60 wt% of an acrylic resin (B), wherein
the acrylic resin (B) contains at least 50 wt% of (meth)acrylic ester monomer unit and 1 to 27 wt% of α,β-ethylenically unsaturated nitrile monomer unit.

Preferably, in the polymer alloy, an amount of the α,β-ethylenically unsaturated nitrile monomer unit in the acrylic resin (B) is 1.5 to 20 wt%.

Preferably, in the polymer alloy, the α,β-ethylenically unsaturated nitrile monomer unit is a (meth)acrylonitrile unit.

Preferably, the polymer alloy further contains an ester compound of a compound (a) expressed by a general formula 1 below and alcohol (b) having ether bonds in its molecules.

General Formula 1: HOOCRCOOH ("R" in the formula indicates an alkylene group having a carbon number of 2 to 10.)

Preferably, the polymer alloy further contains a cross-linking agent.

Furthermore, according to the present invention, there is provided a cross-linked material made by performing cross-linking on the above polymer alloy.

Furthermore, according to the present invention, there is provided a fuel hose made by the above cross-linked material. The fuel hose is preferably used for vehicles.

### DESCRIPTION OF THE PREFERRED EMBODIMENT

### Polymer Alloy

A polymer alloy of the present invention is made by containing a nitrile group-containing copolymer rubber (A) and an acrylic resin (B).

### Nitrile Group-Containing Copolymer Rubber (A)

A nitrile group-containing copolymer rubber (A) used in the present invention is a rubber obtained by copolymerizing α,β-ethylenically unsaturated nitrile monomer unit with a monomer capable of copolymerizing with the α,β-ethylenically unsaturated monomer unit and, in accordance with need, by hydrogenating carbon-carbon unsaturated bonds of the principal chain.

As the α,β-ethylenically unsaturated nitrile monomer unit, acrylonitrile, methacrylonitrile and α-chloroacrylonitrile, etc. may be mentioned. Among them, acrylonitrile is preferable. A content of the α,β-ethylenically unsaturated nitrile unit with respect to a total amount of the nitrile group-containing copolymer rubber (A) is preferably 30 to 80 wt%, and more preferably 35 to 60 wt%. When the content of the α,β-ethylenically unsaturated nitrile unit is too small, resistance to fuel oil tends to become poor, while when too much, resistance to cold tends to become poor.

As a monomer capable of copolymerizing with the α,β-ethylenically unsaturated nitrile monomer unit, a conjugated diene monomer, nonconjugated diene monomer, α-olefin, an aromatic vinyl monomer, fluorine containing vinyl based monomer, α,β-ethylenically unsaturated monocarboxylic acid, α,β-ethylenically unsaturated polycarboxylic acid or an anhydride thereof, α,β-ethylenically unsaturated carboxylic acid ester monomer, and copolymerizable antioxidants, etc. may be mentioned.

As a conjugated diene monomer, 1,3-butadiene, isoprene, 2,3-dimethyl-1,3-butadiene, and 1,3-pentadiene, etc. may be mentioned. Among them, 1,3-butadiene is preferable. As a nonconjugated diene monomer, those having a carbon number of 5 to 12 are preferable, and 1,4-pentadiene, 1,4-hexadiene, vinyl norbornene, and dicyclopentadiene, etc. may be mentioned. As α-olefin, those having a carbon number of 2 to 12 are preferable, and ethylene, propyrene, 1-butene, 4-methyl-1-pentene, 1-hexene, and 1-octene, etc. may be mentioned. As an aromatic vinyl monomer, styrene, α-methylstyrene, and vinylpyridine, etc. may be mentioned. As a fluorine containing vinyl based monomer, fluoroethyl vinyl ether, fluoropropyl vinyl ether, o-trifluoro methyl styrene, vinyl pentafluoro benzoate, difluoroethylene, tetrafluoroethylene, etc. may be mentioned. As α,β-ethylenically unsaturated monocarboxylic acid, acrylic acid, and methacrylic acid, etc. may be mentioned. As α,β-ethylenically unsaturated polycarboxylic acid, itaconic acid, fumaric acid, and maleic acid, etc. may be mentioned. As an anhydride of α,β-ethylenically unsaturated polycarboxylic acid, anhydrous itacoic acid, and anhydrous maleic acid, etc. may be mentioned.

As α,β-ethylenically unsaturated carboxylic acid ester monomer, methyl acrylate, ethyl acrylate, n-dodecil acrylate, methylmethacrylate, ethylmethacrylate, and other (meth)acrylates having an alkyl group having a carbon number of 1 to 18; methoxymethyl acrylate, methoxyethyl methacrylate and other (meth)acrylates having an alkoxyalkyl group having a carbon number of 2 to 12; α-cyanoethyl acrylate, β-cyanoethyl acrylate, cyanobutyl methacrylate and other (meth)acrylate having a cyanoalkyl group having a carbon number of 2 to 12; 2-hydroxyethyl acrylate, 2-hydroxypropyl acrylate, 2-hydroxyethyl methacrylate and other (meth)acrylate having a hydroxyalkyl group having a carbon number of 1 to 12; maleic acid monoethyl, itacoic acid mono n-butyl and other α,β-ethylenically dicarboxylic acid monoalkyl ester; maleic acid dimethyl, fumaric acid dimethyl, itacoic acid dimethyl, itacoic acid diethyl and other α,β-ethylenically dicarboxylic acid dialkyl ester; dimethyl aminomethyl acrylate, dimethylaminoethyl acrylate and other amino group-containing α,β-ethylenically unsaturated carboxylic acid ester; trifluoroethyl acrylate, tetrafluoropropyl methacrylate and other fluoroalkyl group-containing (meth)acrylate; fluorobenzyl acrylate, fluorobenzyl methacrylate and other fluorine substituted benzyl (meth)acrylate; etc. may be mentioned.

As a copolymerizable antioxidant, N-(4-anylinophenyl)acrylamide, N-(4-anilinophenyl)methacrylamide, N-(4-anilinophenyl)cinnamamide, N-(4-anilinophenyl)crotonamide, N-phenyl-4-(3-vinylbenzyloxy)aniline, N-phenyl-4-(4-vinylbenzyloxy)aniline, etc. may be mentioned.

Preferably, the nitrile group-containing copolymer rubber (A) used in the present invention substantially does not contain halogen. Specifically, a content of halogen is preferably 0.5 wt% or less, more preferably 0.1 wt% or less, and particularly preferably 0 wt%. The smaller the halogen content is, the more an amount of released halogen at the time of disposal processing can be decreased, which is advantageous.

The Mooney viscosity (ML₁₊₄, 100°C) of the nitrile group-containing copolymer rubber (A) used in the present invention is preferably 10 to 300, more preferably 20 to 250, and particularly preferably 30 to 200. When the Mooney viscosity is too small, a mechanical property of a cross-linked material may become poor, while when too large, workability may become poor.

A production method of the nitrile group-containing copolymer rubber (A) used in the present invention is not particularly limited and may be obtained by polymerizing a monomer unit by following a well known method.

### Acrylic Resin (B)

The acrylic resin (B) used in the present invention contains a (meth)acrylic ester monomer unit by 50 wt% or more, preferably 70 wt% or more.

Furthermore, the acrylic resin (B) used in the present invention contains α,β-ethylenically unsaturated nitrile monomer unit. As a α,β-ethylenically unsaturated nitrile monomer unit, those in the case of the ntirile group-contianing copolymer rubber (A) explained above may be mentioned. Among them, (meth)acrylonitrile is preferable.

A content of the α,β-ethylenically unsaturated nitrile monomer unit with respect to a total amount of the acrylic resin (B) is 1 to 27 wt%, and preferably 1.5 to 20 wt%. By containing 1 to 27 wt% of α,β-ethylenically unsaturated nitrile monomer unit, it becomes easy to be mixed well with the nitrile group-containing copolymer rubber (A), as a result, resistance to ozone can be improved while improving the dispersability; while when containing too much, resistance to ozone is liable to decline.

The (meth)acrylic ester monomer unit of the acrylic resin (B) used in the present invention may be in any form of an acrylic acid ester homopolymer unit; methacrylic acid ester homopolymer unit; a copolymer unit of acrylic acid ester and methacrylic acid ester; a copolymer unit of one or both of acrylic acid ester and methacrylic acid ester with a monomer capable of copolymerizing with these.

As a (meth)acrylic acid ester monomer unit, (meth)acrylic acid methyl, (meth)acrylic acid ethyl, (neth)acrylic acid propyl, (meth)acrylic acid n-butyl, (meth)acrylic acid isobutyl, (meth)acrylic acid t-butyl, (meth)acrylic acid 2-ethylhexyl, (meth)acrylic acid octyl, etc. may be mentioned.

A monomer capable of copolymerizing with (meth)acrylic acid ester is not particularly limited as far as it can be copolymerized with one or both of acrylic acid ester and methacryl acid ester, but a monomer wherein unsaturated bonds are not introduced in the principal chain is preferable, and a monomer wherein a cross-linked functional group is not introduced is preferable. As monomers as such, an aromatic vinyl monomer, a vinyl ester monomer, and a vinyl ether monomer, etc. are mentioned. As an aromatic vinyl monomer, styrene, vinyl toluene, α-methylstyrene, etc. may be mentioned. As a vinyl ester monomer, vinyl acetate, and vinyl propionate, etc. may be mentioned. As a vinyl ether monomer, methylvinylether, ethylvinylether, and hydroxybutylvinylether, etc. may be mentioned.

Preferably, the acrylic resin (B) used in the present invention substantially does not contain halogen. Specifically, a content of halogen is 0.5 wt% or less, more preferably 0.1 wt% or less, and particularly preferably 0 wt%. The smaller the halogen content is, the more advantageous it becomes in the same way as in the case of the nitrile group containing copolymer rubber (A) explained above.

The weight-average molecular weight (Mw) of the acrylic resin (B) used in the present invention is not particularly limited, and it is preferably 50,000 to 4,000,000, more preferably 100,000 to 2,000,000, particularly preferably 200,000 to 1,000,000 in terms of a polystyrene expressed value by gel permeation chromatography (GPC). When the weight-average molecular weight is too small, resistance to ozone is liable to decline. While when the weight-average molecular weight is too large, molding workability may decline.

As the acrylic resin (B) used in the present invention, those wherein the higher value of the glass transition temperature and the melting temperature is 250°C or lower are preferable, and those with 100 to 230°C are more preferable. Depending on the configuration, there are some acrylic resins having a glass transition temperature but not a melting temperature. In that case, the glass transition temperature is preferably in the above ranges. When the temperature is too low or too high, resistance to ozone may be poor.

A production method of the acrylic resin (B) used in the present invention is not particularly limited but is preferably obtained in a particle state by emulsion polymerization and suspension polymerization. Seed polymerization may be performed in the emulsion polymerization and suspension polymerization.

An average particle diameter of the acrylic resin (B) produced as particles is not particularly limited, but is preferably 10 µm or less, and more preferably 2 µm or less. When the average particle diameter is too large, there is a tendency that resistance to ozone declines in a cross-linked material. An average particle diameter of the acrylic resin (B) can be controlled by a polymerization condition. Alternately, the particle diameter of the acrylic resin can be adjusted by pulverizing a block acrylic resin (B) by a pulverizer, such as a jet pulverizer, mechanical crusher, a roll mill, a hammer mill, and an impeller breaker, and classifying by introducing the obtained pulverized substance in a classifier, such as a wind force classifier and a screen classifier.

A content of the nitrile group-containing copolymer rubber (A) with respect to a total amount of the nitrile group-containing copolymer rubber (A) and the acrylic resin (B) is 40 to 90 wt%, and preferably 60 to 80 wt%. Also, a content of the acrylic resin (B) with respect to the total amount of the nitrile group-containing copolymer rubber (A) and the acrylic resin (B) is 10 to 60 wt%, and preferably 20 to 40 wt%. When the content of the nitrile group-containing copolymer rubber (A) is too small and the content of the acrylic resin (B) is too much, rubber elasticity is lost, while when the content of the nitrile group-containing copolymer rubber (A) is too large, resistance to ozone is liable to decline.

### Ester Compound (C)

A polymer alloy of the present invention preferably includes an ester compound (C) of a compound (a) expressed by the general formula 1 below and alcohol (b) having ether bonds in molecules other than the nitrile group-containing copolymer rubber (A) and the acrylic resin (B).

### General Formula 1: HOOCRCOOH ("R" indicates an alkylene group having a carbon number of 2 to 10.)

The alkylene group R of the compound (a) expressed by the formula 1 (hereinafter, also referred to as a compound (a)) preferably has a straight-chain, and particularly, more preferably, both ends of the straight-chain alkylene group bond with a caborxyl group. Also, a carbon number of the alkylene group R is 2 to 10, and preferably 4 to 8. When the carbon number of the alkylene group is too small, resistance to ozone becomes poor in a vulcanizate. Inversely, when the carbon number is too large, it is liable that a rubber composition cannot be kneaded and bleeding of the ester compound (C) is generated on cross-linked material surfaces.

As specific examples of the compound (a), succinate, glutaric acid, methylsuccinate, adipic acid, dimethyl saccinate, pimeric acid, suberic acid, tetramethyl succinate, azelaic acid and sebacic acid, etc. may be mentioned.

Alcohol (b) having ether bonds in molecules (hereinafter, also referred to as alcohol (b)) has a carbon number of preferably 4 to 10, and more preferably 6 to 8; and monohydric alcohol is preferable. The number of ether bonds contained in a molecule of the alcohol (b) is preferably 1 to 4, and more preferably 1 to 2. When the number of ether bonds is too large, resistance to ozone may decline in a cross-linked material.

As preferable examples of the alcohol (b), methoxypropyl alcohol, ethoxyethyl alcohol or propoxymethyl alcohol and other alcohol having 4 carbon atoms and 1 ether bond; dimethoxyethyl alcohol or methoxyethoxymethyl alcohol and other alcohol having 4 carbon atoms and 2 ether bonds; methoxybutyl alcohol, ethoxypropyl alcohol, propoxyethyl alcohol or other alcohol having 5 carbon atoms and 1 ether bond; dimethoxypropyl alcohol, methoxyethyxyethyl alcohol, diethoxynethyl alcohol and other alcohol having 5 carbon atoms and 2 ether bonds; butoxyethyl alcohol, propoxypropyl alcohol, ethoxybutyl alcohol, methoxypentyl alcohol or pentoxyethyl alcohol and other alcohol having 6 carbon atoms and 1 ether bond; dimethoxybutyl alcohol, methoxyethoxypropyl alcohol, diethoxyethyl alcohol and other alcohol having 6 carbon atoms and 2 ether bonds; butoxypropyl alcohol, propoxybutyl alcohol, ethoxypentyl alcohol, methoxyhexyl alcohol and other alcohol having 7 carbon atoms and 1 ether bond; dimethoxypentyl alcohol, methoxyethoxybutyl alcohol, methoxypropoxy propane and other alcohol having 7 carbon atoms and 2 ether bonds; penthoxypropyl alcohol, butoxybutyl alcohol, propoxypentyl alcohol, ethoxyhexyl alcohol, methoxyheptyl alcohol and other alcohol having 8 carbon atoms and 1 ether bond; butoxyethoxyethyl alcohol, propoxypropoxyethyl alcohol, propoxyethoxypropyl alcohol, ethoxypropoxypropyl alcohol, methoxybutoxypropyl alcohol, ethoxyethoxybutyl alcohol and other alcohol having 8 carbon atoms and 2 ether bonds; may be mentioned.

As the ether compound (C), those obtained by freely combining the compounds (a) expressed by the above general formula 1 and the alcohol (b) having ether bonds can be used. Normally, a monoester compound and diester compound are used, and diester compound is preferable. Specifically, preferably, dibutoxyethyl adipate, di(butoxyethoxyethyl)adipate, etc. may be mentioned, and di(butoxyethoxyethyl)adipate is particularly preferable.

A blending quantity of the ester compound (C) with respect to 100 parts by weight of the nitrile group-containing copolymer rubber (A) is preferably 5 to 85 parts by weight, more preferably 15 to 70 parts by weight, and furthermore preferably 25 to 60 parts by weight. When the blending quantity of the ester compound (C) is too small, resistance to ozone may decline, while when too much, rubber elasticity may decline in a cross-linked material.

Other than the nitrile group-containing copolymer rubber (A) and the acrylic resin (B) (preferably, furthermore the above ester compound (C)), a polymer alloy according to the present invention may contain rubbers other than the nitrile group-containing copolymer rubber (A) and resins other than the acrylic resin (B) in a range of not hindering the effects and object of the present invention. A content of the rubbers or resins is normally 20 parts by weight or less and preferably 15 parts by weight or less with respect to a total amount of 100 parts by weight of the nitrile group-containing copolymer rubber (A) and acrylic resin (B). When the content of the rubbers, etc. is too much; resistance to gasoline penetration, resistance to cold and resistance to ozone may decline in a polymer alloy.

A polymer alloy according to the present invention may contain compounding agents used for general rubbers, for example, carbon black, silica and other reinforcing agents; calcium carbonate, magnesium carbonate, clay, kaolin clay, talc, fine talk powder, mica, aluminum hydroxide, magnesium hydroxide, hydrated silica, magnesium silicate, aluminum silicate, calcium silicate and other fillers; α,β-unsaturated carboxylic acid metal salt; pigments; and antioxidants; etc.

A polymer alloy according to the present invention can be fabricated by a dry blend method, etc. for mixing the nitrile group-containing copolymer rubber (A), the acrylic resin (B) and, in accordance with need, compounding agents, etc. to be blended while heating by using a mixing machine, such as a roll and Banbury. Alternately, it may be fabricated by using a latex coprecipitation method for mixing the nitrile group-containing copolymer rubber (A) and the acrylic resin (B) in a latex state and coagulating.

### Crosslinkable Polymer Alloy

In the present invention, a crosslinkable polymer alloy can be obtained by blending a cross-linking agent with the above polymer alloy. As a cross-linking agent, a sulfur based cross-linking agent, an organic peroxide, a polyamine based cross-linking agent, etc. may be mentioned.

As a sulfur cross-linking agent, sulfur powder, precipitated sulfur and other sulfur; 4,4'-dithiomorpholine, tetramethyl thiuram disulfide, tetraethyl thiuram disulfide, a polysulfide polymer and other organic sulfur compounds; etc. may be mentioned.

As an organic peroxide, dialkyl peroxides, diacyl peroxides, and peroxy esters, etc. may be mentioned. As a dialkyl peroxide, dicumyl peroxide, di-t-butyl peroxide, 2,5-dimethyl-2,5-di(t-butyl peroxy)-3-hexine, 2,5-dimethyl-2,5-di(t-butyl peroxy)hexane, and 1,3-bis(t-butyl peroxy isopropyl)benzene, etc. may be mentioned. As a diacyl peroxide, benzoyl peroxide, and isobutyl peroxide, etc. may be mentioned. As a peroxy ester, 2,5-dimethyl-2,5-bis(benzoyl peroxy)hexane, t-butylperoxy isopropyl carbonate, etc. may be mentioned.

A polyamine based cross-linking agent is a compound having two or more amino groups, wherein a plurality of hydrogen of aliphatic hydrocarbon and aromatic hydrocarbon are substituted by an amino group or the hydrazide structure, that is, the structure expressed by -CONHNH₂. As the polyamine based cross-linking agent, aliphatic polyamines, aromatic polyamines, and compounds having two or more hydrazide structures, etc. may be mentioned. As aliphatic polyamines, hexamethylene diamine, hexamethylene diamine carbamate, tetramethylene pentamine, hexamethylene diamine-cinnamaldehyde adduct, and hexamethylene diamine-dibenzoate salt, etc. may be mentioned. As aromatic polyamines, 4,4'-methylene dianiline, 4,4'-oxydiphenylamine, m-phenylene diamine, p-phenylene diamine, and 4,4'-methylene bis(o-chloroaniline), etc. may be mentioned. As compounds having two or more hyrazide structures, isophthalic acid dihydrazide, diapic acid dihydrazide, and dihydrazide sebacate, etc. may be mentioned.

A blending quantity of a cross-linking agent differs in accordance with a kind of the cross-linking agent, but is 0.1 to 10 parts by weight, preferably 0.3 to 7 parts by weight, and particularly preferably 0.5 to 5 parts by weight with respect to 100 part by weight of the nitrile group-containing copolymer rubber (A). When the use amount of the cross-linking agent is too small, the permanent compression set becomes large, while when too much, the resistance to flex fatigue becomes poor.

When using a sulfur based cross-linking agent, a cross-linking accelerator is normally used together. As the cross-linking accelerator, a zinc oxide, a sulphenamide based cross-linking accelerator, guanidine based cross-linking accelerator, a thiazole based cross-linking accelerator, a thiuram based cross-linking accelerator, a dithio acid salt based cross-linking accelerator, etc. may be mentioned. A use amount of a cross-linking accelerator is not particularly limited, and may be determined in accordance with the use of the cross-linking material, required performance, a kind of a sulfur cross-linking agent and a kind of the cross-linking accelerating agent, etc.

When using an organic peroxide, a cross-linking auxiliary is normally used together. As the cross-linking auxiliary, triallyl cyanulate, trimethylolpropane trimethacrylate, and N,N'-m-phenilene bis maleimide, etc. may be mentioned. They may be used by being dispersed in clay, calcium carbonate and silica, etc. to improve workability of a polymer alloy. A use amount of a cross-linking auxiliary is not particularly limited, and may be determined in accordance with the use of the cross-linking material, required performance, a kind of a cross-linking accelerating agent, and a kind of the cross-linking auxiliary, etc.

A method of fabricating a crosslinkable polymer alloy according to the present invention is not particularly limited, and a well known method of blending a cross-linking agent to a rubber may be used. Note that blending of a cross-linking agent is preferably performed by a method of hardly causing shear heating so as not to proceed cross-linking during mixing. For example, it is preferable that after performing Banbury mixing without blending a cross-linking agent, a cross-linking agent is blended to be finally mixed by a roll.

### Cross-Linking Material

In the present invention, the above crosslinkable polymer alloy may be made to be a cross-linking material by heating to a higher temperature than the cross-linking starting temperature of the cross-linking agent included in the polymer alloy. The cross-linking temperature may be determined in accordance with characteristics of the acrylic resin (B), but is preferably 100 to 200°C, more preferably 130 to 190°C, and particularly preferably 140 to 180°C in general cross-linking agents. When the temperature is too low, it is liable that the cross-linking time becomes too long and the cross-linking density becomes low. When the temperature is too high, a molding deficiency may be caused.

Also, the cross-linking time differs in accordance with the cross-linking method, the cross-linking temperature and the shape, etc., and is preferably one minute or longer but not longer than 5 hours in terms of production efficiency. Also, depending on the molding shape and size, etc., there are some cases where cross-linking is not fully performed in the middle, therefore, secondary cross-linking may be performed.

A heating method for performing cross-linking may be suitably selected from methods used for cross-linking of rubbers, such as press heating, steam heating, oven heating and hot air heating.

The cross-linking material explained above has a small gasoline penetration, a low brittle temperature and excellent resistance to ozone. Therefore, it is preferably used as a material of industrial parts, such as a hose, belt, seal and roll. Specifically, it is preferable as a material of vehicle interior parts, such as a fuel hose, air-intake hose, air duct hose, timing belt, packing, oil seal, and OA roll. Among these, it is particularly preferable as a material of a fuel hose (more preferably, a vehicle fuel hose).

### Fuel Hose

A fuel hose according to the present invention is made by the above cross-linking material. The structure is not particularly limited, not limited to a single layer, and may be a multilayer structure of two or more layers having other rubber layer and resin layer, etc.

As a specific example of a vehicle fuel hose, a fuel filler hose for supplying fuel oil from a fuel inlet to a fuel tank, generally called as a filler hose, filler neck hose and inlet hose, etc.; a fuel breather hose for holding an inner pressure of the fuel tank at an atmospheric pressure; and a hose called a fuel evaporation hose for supplying vapor gasoline generated in the fuel tank; etc. may be mentioned. Furthermore, hoses called as a vapor hose (fuel vapor hose), fuel hose, in-tank hose and hose for taking regulatory measures to onboard refueling vapor recovery (ORVR) are also included.

A method of producing a fuel hose according to the present invention is not particularly limited, and produced by a conventionally well known method. Preferably, it is produced by molding a crosslinkable polymer alloy including the above explained cross-linking agent to make a predetermined shaped hose by a conventionally well known molding method, such as injection molding and extruding molding, and performing cross-linking by a steam cross-linking method, etc.

Above, an explanation was made on embodiments of the present invention, but the present invention is not at all limited by the embodiments and may be variously embodied within the scope of the present invention.

### EXAMPLES

Below, the present invention will be explained specifically by taking examples and comparative examples. Below, "part" and "%" are based on weight unless otherwise mentioned.

### Example 1

First, an acrylic resin (B) was produced as below. 150 parts of ion-exchange water, 1.5 parts of potassium oleate (emulsifying agent), 0.3 part of ammonium persurfate (polymerization initiator), 98.13 parts of methyl methacrylate, and 1.87 parts of acrylonitrile were put in a reactor and brought to react at 80°C for 12 hours while aditating, then, the polymerization was stopped. A part of the obtained polymerization reaction liquid was sampled, and the solid quantity was measured. The results were that the polymerization inversion rate was 98.3% and the solid concentration was about 39%. The obtained acrylic resin (acrylic resin b1) was particles having an amount of acrylonitrile monomer unit of 1.87% and an average particle diameter of about 0.11 µm. A size of the particles was measured by using a light scattering method particle size analyzer (Model N4 made by Coulter Inc.). The acrylic resin b1 particles were dissolved in tetrahydroflane and subjected to gel permeation chromatography, and when measuring polystyrene as a standard substance, the weight-average molecular weight was about 1,120,000. The polymerization reaction liquid was filtrated to collect acrylic resin b1 particles, then washing by dispersing in pure water, filtrating and collecting was performed for two times, dried, and acrylic resin b1 particles were obtained. A glass transition temperature of the particles was measured and was 105°C. The glass transition temperature was measured by a differential scanning calorimetry method (DSC method). Note that the acrylic resin b1 particles did not have a melting temperature. The later explained acrylic resins b2 to b7 were the same.

Next, by using 30 parts of the thus obtained acrylic resin b1 particles containing 1.87% of acrylonitrile monomer unit and 70 parts of acrylonitrile-butadiene copolymer rubber (having the Mooney viscosity of 78 measured based on the JIS-K6300) having an amount of acrylonitrile monomer unit of 42.5% as the nitrile group-containing copolymer rubber (A), a polymer alloy for fuel holes was produced by using a B-type Banbury (a temperature inside the cavity was 50°C).

The obtained polymer alloy was added with 60 parts of carbon black (Asahi #50 made by Asahi Carbon Co., Ltd.), 5 parts of a plasticizer A (diotycle phthalate), 15 parts of a plasticizer B (adipic acid ester, ADK Cizer RS-107 made by Asahi Denka Co., Ltd.), 1 part of stearic acid, 5 parts of zinc oxide (zinc oxide #1), 0.5 part of sulfur (capable of passing 325 mesh), 1.5 parts of N-cyclohexylbenzothiazole-2-sulfenamide, and 1.5 parts of tetramethyl thiuram disulfide to obtain a crosslinkable polymer alloy. The crosslinkable polymer alloy is subjected to press cross-linking under a condition of 160°C for 20 minutes to produce a test cross-linking sheet having a thickness of 2 mm.

By using the cross-linking sheet, resistance to cold, resistance to ozone, resistance to gasoline penetration and resistance to fuel oil were evaluated.

The resistance to cold (low temperature characteristic) was evaluated by the Gehman torsion test (JIS-K6261) by obtaining temperatures T2, T5, T10 and T100 (unit: °C), at which the specific elastic modulus of the test cross-linking sheet becomes 2, 5, 10 and 100, respectively. As to the resistance to cold, the lower the temperature, the more excellent the resistance to cold becomes. The results are shown in Table 1.

The resistance to ozone was evaluated based on the JIS-K6259 at 40°C, with ozone concentration of 50 pphm, and elongation by 50%; and the states after 24 hours, 48 hours, 72 hours and 144 hours were evaluated. The less generation of later explained cracks is, the more excellent the resistance to ozone becomes. The evaluation was indicated by the following codes. "NC": No crack generation was observed. "A2" and "B2": The alphabets indicate the number of cracks; B is larger than A, and C is larger than B. The larger the number, the larger the crack is. "Cut": Crack was so large that the test cross-linking sheet was cut. The results are shown in Table 1.

The resistance to gasoline penetration was evaluated by measuring on a fuel oil C (Fuel-C: a mixture of isooctane and toluene by the volume ratio of 1:1) by an aluminum cup method. In the aluminum cup method, 50 ml of the fuel oil C was put in an aluminum cup having a capacity of 100 ml, a sheet cut to be a disk shape having a diameter of 61 mm and a thickness of 2 mm was capped thereon, an area of separating inside and outside the aluminum cup by the sheet was adjusted to be 25.50 mm² by a clamp, the aluminum cup was left in a constant temperature chamber at 40°C, and the weight was measured every 24 hours, so that a penetration P (unit: g·mm/cm²·day) of the fuel oil at every 24 hours was measured and the maximum value was considered as the penetration. The smaller the maximum value of the penetration amount is, the more excellent the resistance to gasoline penetration becomes. The results are shown in Table 1.

The resistance to fuel oil was evaluated based on the JIS-K6258 by soaking the test cross-linking sheet in the fuel oil C adjusted to be 40°C and obtaining the volume swelling degree ΔV (unit: %) after 70 hours. The lower the volume swelling degree is, the more excellent the resistance to fuel oil becomes. The results are shown in Table 1.

### Example 2

Other than changing the use amount of acrylonitrile, an acrylic resin (acrylic resin b2) having an amount of acrylonitrile monomer unit of 9.02%, an average particle diameter of about 0.12 µm, a weight-average molecular weight of 1,250,000 and a glass transition temperature of 104°C was obtained in the same way as in the example 1. By using the acrylic resin b2 particles, a test cross-linking sheet having a thickness of 2 mm was produced in the same way as in the example 1, and resistance to cold, resistance to ozone, resistance to gasoline penetration and resistance to fuel oil were evaluated. The results are shown in Table 1.

### Example 3

Other than changing the use amount of acrylonitrile, an acrylic resin (acrylic resin b3) having an amount of acrylonitrile monomer unit of 16.5%, an average particle diameter of about 0.11 µm, a weight-average molecular weight of 1,170,000 and a glass transition temperature of 103°C was obtained in the same way as in the example 1. By using the acrylic resin b3 particles, a test cross-linking sheet having a thickness of 2 mm was produced in the same way as in the example 1, and resistance to cold, resistance to ozone, resistance to gasoline penetration and resistance to fuel oil were evaluated. The results are shown in Table 1.

### Comparative Example 1

Other than not using acrylonitrile, an acrylic resin (acrylic resin b4) having an average particle diameter of about 0.12 µm, a weight-average molecular weight of 1,220,000 and a glass transition temperature of 105°C was obtained in the same way as in the example 1. By using the acrylic resin b4 particles, a test cross-linking sheet having a thickness of 2 mm was produced in the same way as in the example 1, and resistance to cold, resistance to ozone, resistance to gasoline penetration and resistance to fuel oil were evaluated. The results are shown in Table 1.

### Comparative Example 2

Other than changing the use amount of acrylonitrile, an acrylic resin (acrylic resin b5) having an amount of acrylonitrile monomer unit of 27.7%, an average particle diameter of about 0.11 µm, a weight-average molecular weight of 1,180,000 and a glass transition temperature of 103°C was obtained in the same way as in the example 1. By using the acrylic resin b5 particles, a test cross-linking sheet having a thickness of 2 mm was produced in the same way as in the example 1, and resistance to cold, resistance to ozone, resistance to gasoline penetration and resistance to fuel oil were evaluated. The results are shown in Table 1.

### Example 4

Other than changing the use amount of acrylonitrile, an acrylic resin (acrylic resin b6) having an amount of acrylonitrile monomer unit of 9.3%, an average particle diameter of about 0.11 µm, a weight-average molecular weight of 1,240,000 and a glass transition temperature of 104°C was obtained in the same way as in the example 1.

Also, in the present example, an acrylonitrile-butadiene copolymer rubber (the Mooney viscosity was 90) having an amount of acrylonitrile monomer unit of 46% was used.

Other than the above, a test cross-linking sheet having a thickness of 2 mm was produced in the same way as in the example 1, and resistance to cold, resistance to ozone, resistance to gasoline penetration and resistance to fuel oil were evaluated. The results are shown in Table 1.

### Example 5

Other than changing the use amount of acrylonitrile, an acrylic resin (acrylic resin b7) having an amount of acrylonitrile monomer unit of 26.3%, an average particle diameter of about 0.12 µm, a weight-average molecular weight of 1,190,000 and a glass transition temperature of 103°C was obtained in the same way as in the example 1.

Also, in the present example, an acrylonitrile-butadiene copolymer rubber (the Mooney viscosity was 78) having an amount of acrylonitrile monomer unit of 50% was used.

Other than the above, a test cross-linking sheet having a thickness of 2 mm was produced in the same way as in the example 1, and resistance to cold, resistance to ozone, resistance to gasoline penetration and resistance to fuel oil were evaluated. The results are shown in Table 1.

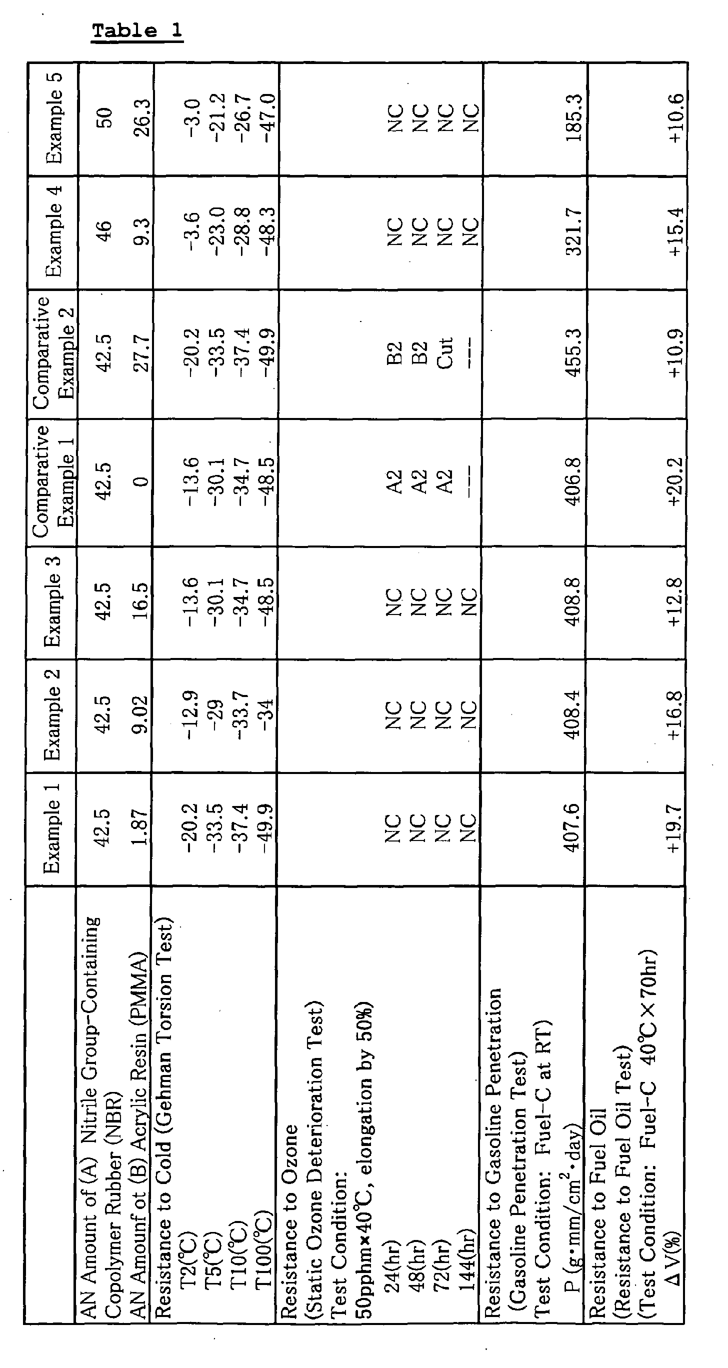

As shown in Table 1, the comparative examples 1 and 2, wherein the content of acrylonitrile monomer unit in the methyl methacrylate polymer is out of the range of the present invention, were confirmed to have excellent resistance to cold and resistance to fuel oil, but cracks were generated in a short time as within 72 hours and resistance to ozone was insufficient. Also, the comparative example 2 was confirmed to have a tendency that resistance to gasoline penetration also declines.

On the other hand, the examples 1 to 5, wherein a content of acrylonitrile monomer unit in the methyl methacrylate polymer is within the range of the present invention, were confirmed to have excellent resistance to cold, resistance to gasoline penetration and resistance to fuel oil, moreover, cracks were not generated even under a severe condition of elongation of 50% and resistance to ozone was also excellent.

### Example 6

Other than changing an amount of the acrylonitrile-butadiene copolymer rubber in the example 3 to 45 parts and an amount of the polymer b3 to 55 parts, a test cross-linking sheet having a thickness of 2 mm was produced in the same way as in the example 3, and resistance to cold, resistance to ozone, resistance to gasoline penetration and resistance to fuel oil were evaluated. The results were all approximately the same as those in the example 3.

### Example 7

Other than changing an amount of the acrylonitrile-butadiene copolymer rubber in the example 3 to 85 parts and an amount of the polymer b3 to 15 parts, a test cross-linking sheet having a thickness of 2 mm was produced in the same way as in the example 3, and resistance to cold, resistance to ozone, resistance to gasoline penetration and resistance to fuel oil were evaluated. The results were all approximately the same as those in the example 3.

### Comparative Example 3

Other than changing an amount of the acrylonitrile-butadiene copolymer rubber in the example 3 to 35 parts and an amount of the polymer b3 to 65 parts, a test cross-linking sheet having a thickness of 2 mm was produced in the same way as in the example 3, and resistance to cold, resistance to ozone, resistance to gasoline penetration and resistance to fuel oil were evaluated. The results were approximately the same as those in the example 3, but it was liable that the rubber elasticity was lost.

### Comparative Example 4

Other than changing an amount of the acrylonitrile-butadiene copolymer rubber in the example 3 to 95 parts and an amount of the polymer b3 to 5 parts, a test cross-linking sheet having a thickness of 2 mm was produced in the same way as in the example 3, and resistance to cold, resistance to ozone, resistance to gasoline penetration and resistance to fuel oil were evaluated. The results on the resistance to cold, resistance to gasoline penetration and resistance to fuel oil were all approximately the same as those in the example 3, but it was liable that resistance to ozone declines.

As explained above, from the results of example 6, example 7, comparative example 3 and comparative example 4, a polymer alloy (comparative example 3), wherein a content of the acrylic resin (B) exceeded 60%, had poor rubber elasticity, and in a polymer alloy (comparative example 4), wherein a content of the acrylic resin was less than 10%, resistance to ozone declined.

On the other hand, a polymer alloy of the present invention, wherein a content of the acrylic resin (B) was in a range of 10 to 60%, had excellent resistance to cold, resistance to ozone, resistance to gasoline penetration and resistance to fuel oil (the example 6 and example 7).

### Industrial Applicability

According to the present invention, it is possible to provide a polymer alloy having excellent balance of resistance to cold, ozone, gasoline penetration and fuel oil and suitable as a material for fuel hoses, a cross-linked material of the polymer alloy, and a fuel hose composed of the cross-linked material.

## Claims

1. A polymer alloy formed by containing 40 to 90 wt% of a nitrile group-containing copolymer rubber (A) and 10 to 60 wt% of an acrylic resin (B), wherein
said acrylic resin (B) contains at least 50 wt% of (meth)acrylic ester monomer unit and 1 to 27 wt% of α,β-ethylenically unsaturated nitrile monomer unit.

2. The polymer alloy as set forth in claim 1, wherein an amount of the α,β-ethylenically unsaturated nitrile monomer unit in the acrylic resin (B) is 1.5 to 20 wt%.

3. The polymer alloy as set forth in claim 1 or 2, wherein the α,β-ethylenically unsaturated nitrile monomer unit is a (meth)acrylonitrile unit.

4. The polymer alloy as set forth in any one of claims 1 to 3 further containing an ester compound of a compound (a) expressed by a general formula 1 below and alcohol (b) having ether bonds in its molecules.
General Formula 1: HOOCRCOOH ("R" in the formula indicates an alkylene group having a carbon number of 2 to 10.)

5. The polymer alloy as set forth in any one of claims 1 to 4, further containing a cross-linking agent.

6. A cross-linking material formed by performing cross-linking on the polymer alloy as set forth in claim 5.

7. A fuel hose made by the cross-linking material as set forth in claim 6.

8. The fuel hose as set forth in claim 7 used for vehicles.
